Europäisches Patentamt

European Patent Office

Office européen des brevets

(11) Numéro de publication: **0 301 931**
**A2**

# (12) DEMANDE DE BREVET EUROPEEN

(21) Numéro de dépôt: **88401770.8**

(51) Int. Cl.⁴: **G 05 B 19/405**

(22) Date de dépôt: **06.07.88**

(30) Priorité: **07.07.87 FR 8709610**

(43) Date de publication de la demande:
**01.02.89 Bulletin 89/05**

(84) Etats contractants désignés:
**CH DE GB IT LI SE**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Berthe, Jean-Paul**
**18, rue Linné**
**F-78500 Sartrouville (FR)**

(74) Mandataire: **Saint Martin, René et al**
**Régie Nationale des Usines Renault 8 & 10, avenue Emile**
**Zola**
**F-92109 Boulogne Billancourt (FR)**

(54) **Procédé et dispositif de détection d'usure d'un outil de coupe rotatif.**

(57) La présente invention se rapporte à un procédé et à un dispositif de détection d'usure d'un outil de coupe rotatif.

Le procédé selon l'invention est caractérisé par le fait qu'il consiste à mesurer la vitesse de rotation de l'outil, à calculer des valeurs représentatives de la vitesse instantanée plusieurs fois par tour, à stocker ces valeurs représentatives de la vitesse instantanée sur plusieurs tours et à traiter ces valeurs pour fournir un facteur représentatif de l'usure d'outil.

FIG.1

EP 0 301 931 A2

Description

## PROCEDE ET DISPOSITIF DE DETECTION D'USURE D'UN OUTIL DE COUPE ROTATIF

La présente invention se rapporte à un procédé et à un dispositif de détection d'usure d'un outil de coupe rotatif.

Il est interessant de connaitre le degré d'usure prématurée d'un outil de coupe en cours d'usinage afin de garantir un bon usinage et d'éviter la destruction de l'outil.

On connait déjà par le brevet US-4.471.444 un dispositif de détection d'usure dans lequel on mesure à l'aide d'un accéléromètre les vibrations produites et on analyse le signal donné par ledit accéléromètre. Les informations sont analogiques. Il faut donc passer par une étape de numérisation afin d'exploiter le signal à partir d'un micro processeur.

Pour pallier cet inconvénient, l'invention propose un procédé et un dispositif qui analysent les variations de vitesse instantanée de l'outil rotatif de coupe. Elle fournit de plus un détecteur d'accostage pouvant s'utiliser en fraisage, perçage, alésage...

Le procédé selon l'invention est caractérisé par le fait qu'il consiste à mesurer la vitesse de rotation de l'outil, à calculer des valeurs représentatives de la vitesse instantanée plusieurs fois par tour, à stocker ces valeurs représentatives de la vitesse instantanée sur plusieurs tours et à traiter ces valeurs pour fournir un facteur représentatif de l'usure d'outil.

Selon une caractéristique, le procédé consiste à compter les intervalles de temps entre les impulsions données par un capteur délivrant une impulsion à chaque rotation d'un angle déterminé.

Selon une autre caractéristique, le procédé consiste à déterminer à partir du signal représentatif des valeurs de la vitesse instantanée les harmoniques correspondant au nombre de dents de l'outil et à au moins un multiple de ce nombre et à déterminer un facteur d'identification d'usure fonction de la somme quadratique de ces harmoniques. L'opération ainsi réalisée est un filtrage du signal.

Le dispositif selon l'invention est caractérisé par le fait qu'il comporte un capteur rotatif lié en rotation à l'outil de coupe et délivrant une impulsion pour chaque rotation d'un angle déterminé à une unité de calcul et de traitement du signal à micro processeur.

L'invention va maintenant être décrite avec plus de détails en se référant aux dessins annexés sur lesquels :
- la figure 1 est une vue schématique d'une broche munie d'un dispositif selon l'invention ;
- la figure 2 représente d'une part, les impulsions fournies par le capteur rotatif accouplé en rotation à l'outil, d'autre part par le signal vitesse inverse en fonction de la position angulaire de l'outil ;
- la figure 3 représente le signal inverse vitesse pendant un tour de l'outil, et lors d'un accostage ;
- la figure 4 est un organigramme des opérations de traitement des impulsions ;
- la figure 5 est une courbe représentative du spectre inverse vitesse en fonction de l'harmonique pour un outil donné, après 1 pièce ;
- la figure 6 représente la courbe du spectre inverse vitesse en fonction de l'harmonique pour ce même outil, après 40 pièces ;
- la figure 7 représente le facteur d'identification d'usure en fonction du nombre de pièces usinées ;
- la figure 8 représente une courbe de l'usure réelle évaluée par des moyens conventionnels en fonction du nombre de pièces usinées.

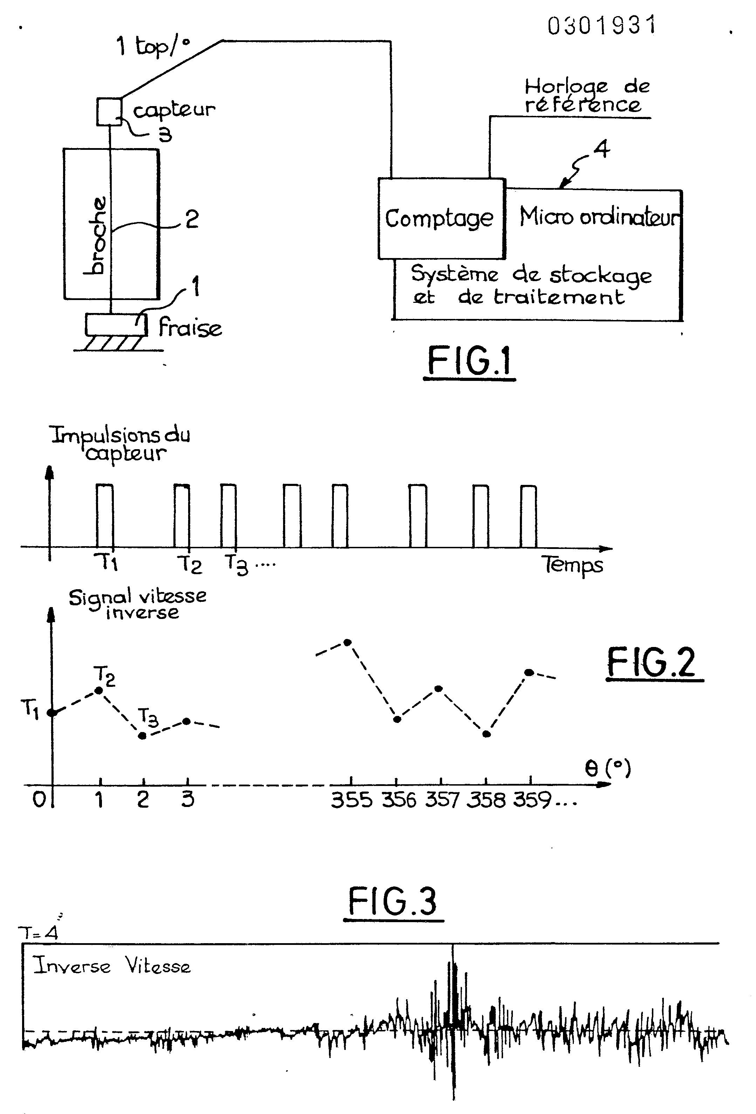

En se référant à la figure 1, le dispositif sert à détecter l'usure d'un outil de coupe rotatif 1 tournant autour d'un axe 2.

La vitesse de rotation de l'outil est mesurée par un capteur tachymétrique 3 délivrant son signal à une unité de calcul et traitement du signal à micro processeur 4.

Dans le mode de réalisation représenté, l'outil est une fraise montée sur une broche.

Le capteur 3 délivre une impulsion à chaque rotation d'un angle déterminé. A titre indicatif il délivre uniquement des impulsions comme représentées sur la figure 2, à savoir 360 impulsions par tour, soit une impulsion chaque fois que l'outil tourne d'un degré.

Le système électronique 4 chronomètre l'intervalle de temps entre chaque impulsion.

Chaque intervalle de temps mesuré sera stocké en mémoire et on obtient ainsi une suite de valeurs qui représente un signal échantillonné. Ce signal n'est pas la vitesse de l'outil mais son inverse car il exprime des temps par unité d'angle, représenté sur la partie inférieure de la figure 2

Le signal n'est pas échantillonné en temps mais en angle. Il est directement synchronisé sur la rotation de l'outil et le calcul des raies spectrales se trouve simplifié.

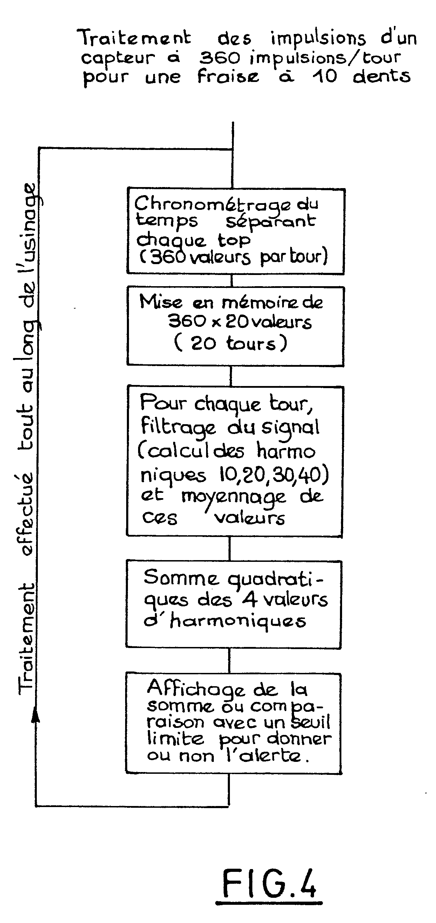

La figure 3 représente le signal inverse vitesse. Le procédé de traitement du signal est donné à la figure 4 lorsque les variations de vitesse dues à la coupe sont recouvertes par d'autres variations. Les variations de vitesse dues à la coupe sont noyées dans les autres variations.

L'unité de calcul 4 chronomètre les intervalles de temps séparant chaque top fourni par le capteur et met en mémoire les différents intervalles sur au moins un tour de l'outil.

Pour chaque tour, l'unité de calcul calcule à partir du signal inverse de vitesse les harmoniques correspondent au nombre de dents de l'outil et à au moins un multiple de ce nombre de dents de l'outil et effectue un moyennage de ces valeurs. A titre indicatif dans le procédé on prend les quatre premiers multiples.

L'unité de calcul détermine un facteur d'indentification d'usure égal à la somme quadratique de ces premiers harmoniques divisée par deux. Cette valeur d'identification d'usure est la variance du signal reconstitué à partir des raies harmoniques.

Ce facteur qui reflète l'état d'usure est affiché ou comparé à un seuil limite pour donner ou non l'alerte.

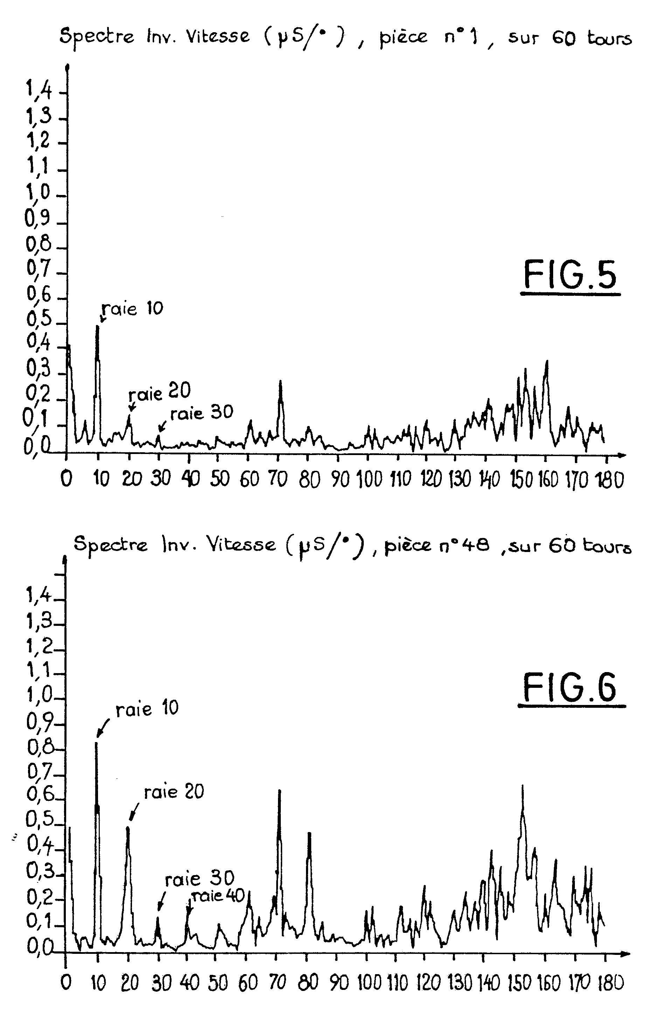

Les figures 5 et 6 montrent les premiers harmoniques du signal inverse vitesse sur l'outil neuf (figure 5) et sur l'outil usagé (figure 6).

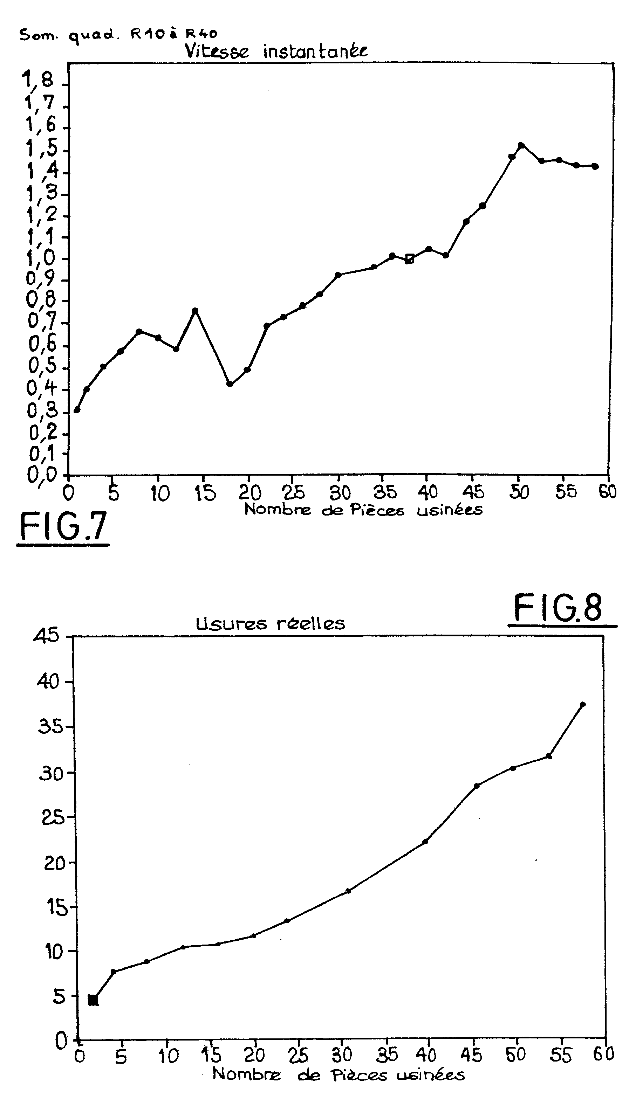

Les figures 7 et 8 montrent la bonne corrélation entre le facteur d'identification d'usure et l'usure de l'outil évaluée par des moyens conventionnels.

Il est bien entendu que l'on peut sans sortir du cadre de l'invention imaginer des variantes et des perfectionnements de détails et de même envisager l'emploi de moyens équivalents.

## Revendications

1. Procédé de détection d'usure d'un outil de coupe rotatif, caractérisé par le fait qu'il consiste à mesurer la vitesse de rotation de l'outil, à calculer des valeurs représentatives de la vitesse instantanée plusieurs fois par tour, à stocker ces valeurs représentatives de la vitesse instantanée sur plusieurs tours et à traiter ces valeurs pour fournir un facteur représentatif de l'usure d'outil.

2. Procédé selon la revendication 1, caractérisé par le fait qu'il consiste à compter les intervalles de temps entre les impulsions données par un capteur délivrant une impulsion à chaque rotation d'un angle déterminé.

3. Procédé selon l'une quelconque des revendications précédentes, caractérisé par le fait qu'il consiste à déterminer, à partir du signal représentatif des valeurs de la vitesse instantanée, les harmoniques correspondant au nombre de dents de l'outil et à au moins un multiple de ce nombre et à déterminer un facteur d'identification d'usure fonction de la somme quadratique de ces harmoniques.

4. Dispositif pour la mise en oeuvre du procédé selon l'une quelconque des revendications précédentes, caractérisé par le fait qu'il comporte un capteur rotatif (3) lié en rotation à l'outil de coupe (1) et délivrant une impulsion pour chaque rotation d'un angle déterminé à une unité de calcul et de traitement du signal à micro processeur (4).

0301931

**FIG.1**

**FIG.2**

**FIG.3**

0301931

Traitement des impulsions d'un
capteur à 360 impulsions/tour
pour une fraise à 10 dents

**Chronométrage du temps séparant chaque top (360 valeurs par tour)**

**Mise en mémoire de 360 x 20 valeurs (20 tours)**

**Pour chaque tour, filtrage du signal (calcul des harmoniques 10,20,30,40) et moyennage de ces valeurs**

**Somme quadratiques des 4 valeurs d'harmoniques**

**Affichage de la somme ou comparaison avec un seuil limite pour donner ou non l'alerte.**

Traitement effectué tout au long de l'usinage

## FIG.4

0301931

Spectre Inv. Vitesse ( µS/° ) , pièce n° 1 , sur 60 tours

FIG.5

Spectre Inv. Vitesse ( µS/° ) , pièce n° 48 , sur 60 tours

FIG.6

0301931

Som. quad. R10 à R40

Vitesse instantanée

Nombre de Pièces usinées

## FIG.7

## FIG.8

Usures réelles

Nombre de Pièces usinées